# EUROPÄISCHE PATENTSCHRIFT

(11) **EP 0 946 834 B1**
(45) Veröffentlichungstag und Bekanntmachung des Hinweises auf die Patenterteilung: **11.04.2001**
(21) Anmeldenummer: 97950102.0
(22) Anmeldetag: 05.11.1997
(51) Int. Cl.: F16H 7/02, F16H 7/06

(54) **ZAHNRIEMEN- ODER KETTENGETRIEBE**
TOOTHED BELT DRIVE OR CHAIN DRIVE
TRANSMISSION A COURROIE DENTEE OU PAR CHAINE

(30) Priorität: 22.11.1996 DE 19648378
(43) Veröffentlichungstag der Anmeldung: 06.10.1999
(73) Patentinhaber: Volkswagen Aktiengesellschaft, 38436 Wolfsburg (DE)
(72) Erfinder: HUNKERT, Steffen, D-38444 Wolfsburg (DE)
(86) Internationale Anmeldenummer: EP9706110
(87) Internationale Veröffentlichungsnummer: WO9823881

(56) Entgegenhaltungen:
- EP-A- 0 255 333
- DE-A- 3 109 172
- DE-A- 4 331 482
- DE-B- 2 906 619
- US-A- 3 377 875
- US-A- 3 738 187
- US-A- 5 267 910
- PATENT ABSTRACTS OF JAPAN vol. 15, no. 89 (M-1088), 4.März 1991 & JP 02 305675 A (CANON INC), 19.Dezember 1990,
- PATENT ABSTRACTS OF JAPAN vol. 9, no. 92 (M-373) [1815] , 20.April 1985 & JP 59 217046 A (HONDA), 7.Dezember 1984,

## Beschreibung

Die Erfindung betrifft ein Zahnriemen- oder Kettengetriebe mit wenigstens einem Zahnrad und wenigstens einem Zahnriemen bzw. wenigstens einer Kette.

Die EP-0 255 333 B1 beschreibt zur Verbesserung von Lasteigenschaften eines Zahnriemenantriebes einen Zahnriemen, dessen Zähne einen Zahnquerschnitt mit konvexer Kurve in Zykloidenform aufweisen. Insbesondere sich zyklisch wiederholende Spitzenbelastungen, wie beispielsweise in Nockenwellenantrieben im Moment des Zündens in einem entsprechenden Arbeitszylinder, führen zu vorzeitigem Verschleiß und Beschädigungen des Zahnriemens. Bei wechselnder Belastung des Zahnriemenantriebes, insbesondere bei kurzzeitigen Lastspitzen, kommt es zu lokalen Überbelastungen, welche nur dadurch berücksichtigt werden können, daß der gesamte Zahnriemen für die maximale Spitzenbelastung ausgelegt ist, unabhängig davon, wie oft oder in welchem Zeitintervall die Spitzenbelastung auftritt. Die Zahnriemenantriebe werden dadurch teuer und sind häufig für 95% oder mehr ihrer Betriebszeit bzw. ihres Betriebszyklus überdimensioniert oder müssen vorzeitig ausgetauscht werden.

Aus der DE-43 31 482 A1, der DE-29 06 619 B1 und der DE-31 09 172 C2 ist es bekannt, zur Reduzierung bzw. Vermeidung von Zahnriemen- bzw. Kettengeräuschen im Betrieb eines Rollenketten- oder Zahnriemengetriebes eine Zahnaufteilung eines Zahnrades und entsprechend eine Kettengliederaufteilung einer Kette unregelmäßig auszubilden. Das Problem kurzzeitiger Spitzenbelastungen kann dadurch jedoch nicht gelöst werden, da sich die Belastung des Zahnriemens lediglich durch unterschiedliche Aufteilung der Zähne nicht verändert.

Aus der gattungsgemäßen US-PS 3.377.875 ist es zur Lebensdauerverlängerung und Geräuschabsenkung eines eine Kette sowie zugehörige Zahnräder aufweisenden Kettentriebes bekannt, einzelne Zähne von einem der Zahnräder unter Beibehaltung der Flankengeometrie derartig abzufräsen, daß diese einzelnen Zähne in jedem ihrer Querschnitte schmaler werden, d. h. eine der Flanken erfährt praktisch eine Parallelverschiebung, oder aber es werden zusätzlich zu dieser Parallelverschiebung einige der Vertiefungen zwischen den betroffenen Zähnen unter Beibehaltung der grundsätzlichen Vertiefungsgeometrie tiefer ausgefräst. Somit sind entweder einige der Zähne nur schmaler oder schmaler und die Vertiefungen sind tiefer ausgebildet.

Der vorliegenden Erfindung liegt daher die Aufgabe zugrunde, ein Zahnriemen- oder Kettengetriebe der obengenannten Art zur Verfügung zu stellen, wobei die Belastbarkeit und die Lebensdauer verbessert ist.

Diese Aufgabe wird erfindungsgemäß durch Zahnriemen- oder Kettengetriebe der o.g. Art mit den in Anspruch 1 gekennzeichneten Merkmalen gelöst.

Dazu ist es erfindungsgemäß vorgesehen, daß wenigstens ein Zahn des Zahnriemenrades und/oder wenigstens ein Zahn des Zahnriemens bzw. wenigstens ein Glied der Kette eine Flankengeometrie aufweist, welche von der Flankengeometrie der jeweils übrigen Zähne abweicht. Dies hat den Vorteil, daß einzelne Zähne des Zahnriemengetriebes so gestaltet sind, daß Lastspitzen den Zahnriemen nicht zusätzlich belasten. Daher verringert sich insbesondere für höchstbelastete Zahnriemengetriebe die Zahnriemenbelastung.

Eine besonders wirkungsvolle Entlastung bei Lastspitzen ergibt sich dadurch, daß die Flankengeometrie bezüglich Vorder- und Hinterflanke des wenigstens einen Zahnes vom Zahnriemen und/oder Zahnrad bzw. des wenigstens einen Gliedes der Kette asymmetrisch ist.

Eine besonders einfacher Aufbau ist dadurch möglich, daß der wenigstens eine Zahn vom Zahnriemen und/oder Zahnrad bzw. das wenigstens eine Glied der Kette eine steilere oder eine flachere Flankengeometrie aufweist oder einen größeren oder kleineren Kopfradius hat oder daß der wenigstens eine Zahn einen größeren oder kleineren Fußradius hat.

Nach der Erfindung ist der wenigstens eine Zahn des Zahnriemens bzw. das wenigstens eine Glied der Kette mit von den übrigen Zähnen bzw. Gliedern abweichender Flankengeometrie derart angeordnet, daß dieser Zahn oder dieses Glied im Moment einer Lastspitze mit wenigstens einem der Zahnräder in Eingriff ist, beziehungsweise ist der wenigstens eine Zahn des Zahnrades mit von den übrigen Zähnen abweichender Flankengeometrie derart angeordnet, daß dieser Zahn im Moment einer Lastspitze mit dem Zahnriemen bzw. der Kette in Eingriff ist. In besonders vorteilhafter Weise befindet sich dieser Zahn bzw. dieses Kettenglied im Moment einer Lastspitze im Einlauf oder im Auslauf des Eingriffs mit wenigstens einem der Zahnräder bzw. im Einlauf oder im Auslauf des Eingriffs mit dem Zahnriemen bzw. der Kette. Dies erzielt eine optimale Wirkung der Entlastung zwischen Zahnriemen bzw. Kette und Zahnrad.

Dadurch, daß wenigstens zwei Zähne des Zahnriemens bzw. wenigstens zwei Glieder der Kette mit von den übrigen Zähnen bzw. Gliedern abweichender Flankengeometrie derart angeordnet sind, daß sich diese Zähne oder diese Glieder im Moment einer Lastspitze im Einlauf und/oder im Auslauf des Eingriffs mit wenigstens einem der Zahnräder befinden, bzw. daß wenigstens zwei Zähne des Zahnrades mit von den übrigen Zähnen abweichender Flankengeometrie derart angeordnet sind, daß sich diese Zähne im Moment einer Lastspitze im Einlauf und/oder im Auslauf des Eingriffs mit dem Zahnriemen bzw. der Kette befinden, wird die Entlastung in vorteilhafter Weise noch weiter verbessert.

In weiterer vorteilhafter Ausgestaltung kann die individuell angepaßte Zahnflankengeometrie sowohl an einem antreibenden wie auch an dem getriebenen Rad bzw. an den entsprechenden Stellen am Riemen oder der Kette vorgenommen werden. Bei einem Riementrieb beispielsweise zwischen einer Kurbelwelle und einer Nockenwelle an einem Kraftfahrzeug können z. B. sowohl an dem antreibenden, wie auch an dem angetriebenen Rad drei Zähne eine individuelle Flankengeometrie aufweisen, die derart ausgebildet ist, daß die durch die ungleichmäßige Anregung entstehende Dehnung des Zahnriemens und die damit auftretenden Teilungsfehler kompensiert werden. Diese Teilungsfehlerkompensation kann über diese mehreren Zahnflankengeometrien abnehmend bis zu einem Wert 0 als Funktion der Dehnung abgebaut werden.

Das erfindungsgemäße Zahnriehmen- oder Kettengetriebe ist besonders vorteilhaft für den Antrieb eines Pumpe-Düse-Direkteinspritzsystemes oder einer Hochdruckpumpe für eine Common-Rail-Hochdruckeinspritzung eines Antriebsaggregates, insbesondere eines Kraftfahrzeuges geeignet.

Weitere Merkmale, Vorteile und vorteilhafte Ausgestaltungen der Erfindung ergeben sich aus den abhängigen Ansprüchen, sowie aus der nachstehenden Beschreibung der Erfindung an Hand der beigefügten Zeichnungen. Diese zeigen in
- Fig. 1: eine schematische Schnittansicht einer herkömmlichen Zahnriemenanordnung,
- Fig. 2: ein bevorzugte Ausführungsform eines Zahnrades gemäß der vorliegenden Erfindung,
- Figs. 3a und 3b: jeweils eine vergrößerte Ansicht eines Zahnes des Zahnrades im Bereich A und B von Figur 2, und
- Figs. 4a und 4b: jeweils eine schematische Darstellung eines Belastungsverlaufes über die Zähne des Zahnrades von Figur 1 bzw. von Figur 2.

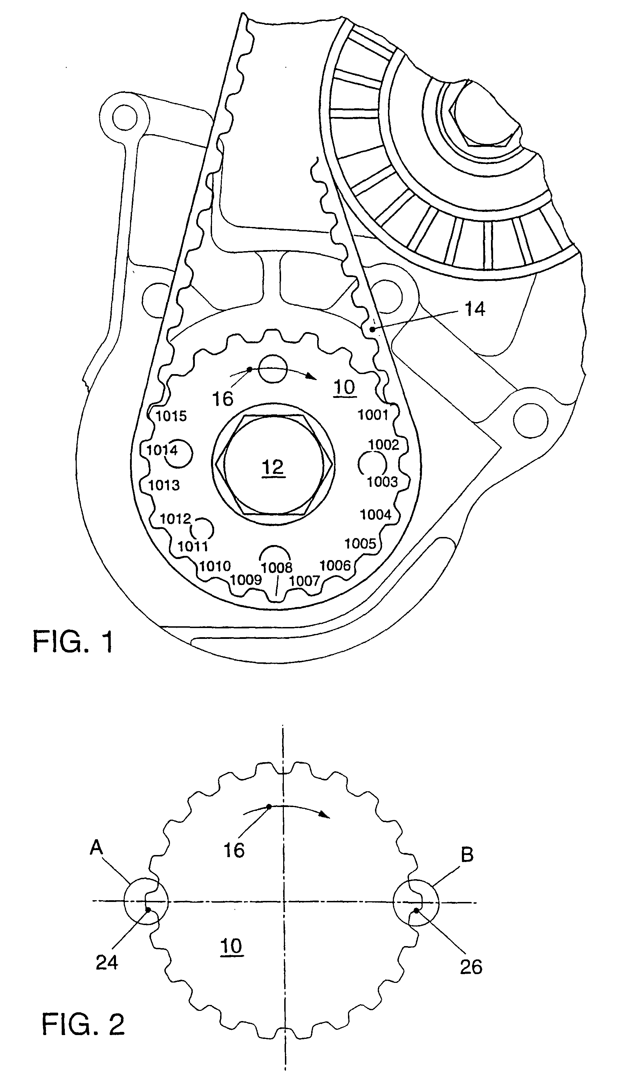

Figur 1 zeigt einen Ausschnitt eines herkömmlichen Zahnriemenantriebs mit einem Zahnriemen 14, der mit Zähnen 1001 bis 1015 eines Zahnrades 10 kämmt. Im dargestellten Ausführungsbeispiel wird das Zahnrad 10 von einer Kurbelwelle 12 einer Brennkraftmaschine angetrieben und betätigt über den Zahnriemen 14 eine nicht gezeigte Nockenwelle. Pfeil 16 gibt den Drehsinn des Zahnrades 10 an.
Der Zahn 1001 befindet sich im Einlauf und der Zahn 1015 im Auslauf des Eingriffs zwischen Zahnrad 10 und Zahnriemen 14.

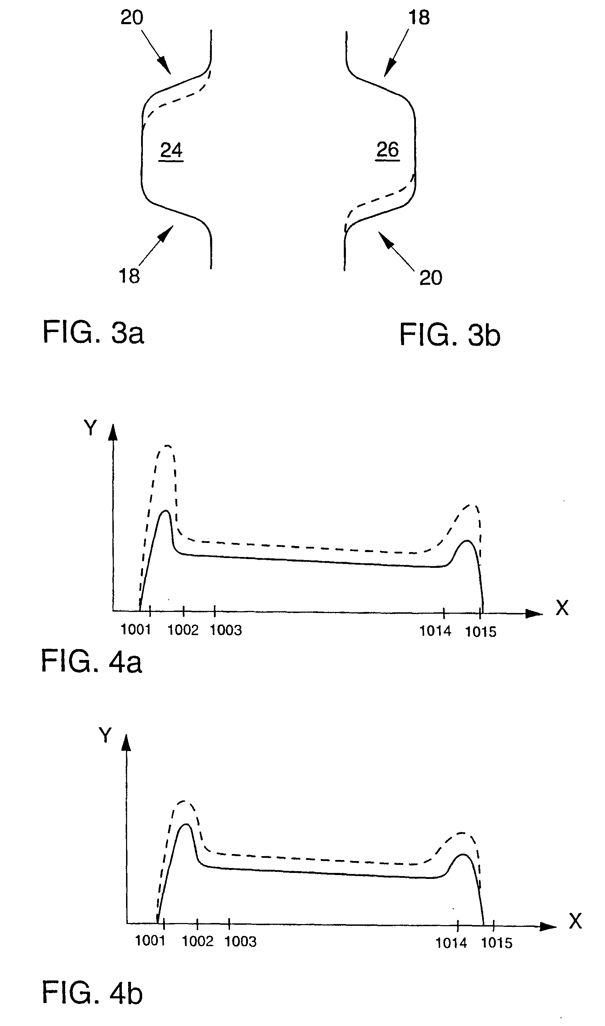

Figur 2 zeigt eine vorteilhafte Ausführungsform eines Zahnrades 10, wobei die Figuren 3a und 3b jeweils vergrößerte Ansichten der Bereiche A und B von Figur 2 sind und die Flankengeometrie der jeweiligen Zähne 24 und 26 veranschaulichen. Die gestrichelte Linie stellt die Flankengeometrie der Zähne 24 und 26 dar, während die durchgezogene Linie die Flankengeometrie der übrigen Zähne zeigt. Dabei haben die Flanken 18 und 20 der Zähne 24 und 26 unterschiedliche Geometrien, so daß sich am Einlauf und am Auslauf des Eingriffs zwischen dem Zahnrad 10 und dem Zahnriemen (nicht dargestellt) verminderte Belastungen ergeben. Mit anderen Worten haben die Zähne 24 und 26 eine asymmetrische Flankengeometrie.

Die Zähne 24 und 26 sind dabei so ausgewählt, daß sie sich genau dann in der in Figur 2 dargestellten Position befinden, wenn eine Lastspitze durch Zünden in einem entsprechenden Arbeitszylinder der Brennkraftmaschine auftritt.

Die Figuren 4a und 4b veranschaulichen den Verlauf einer Flankenkraft am Zahn über den Zähnen 1001 bis 1015 des Zahnrades 10. Auf der x-Achse sind dabei jeweils die Zahnnummern 1001 bis 1015 und auf der y-Achse die Flankenkraft am Zahn aufgetragen. Die durchgezogene Linie veranschaulicht den Flankenkraftverlauf bei normaler Belastung und die gestrichelte Linie den Verlauf bei Belastungsspitzen.

Figur 4a zeigt den Flankenkraftverlauf eines herkömmlichen Zahnrades, während Figur 4b den Verlauf für ein erfindungsgemäßes Zahnrad 10 veranschaulicht. Es ergibt sich unmittelbar, daß im Bereich Flankenkraftspitzen bei den Zähnen 1001 und 1015 die Belastung bei dem erfindungsgemäßen Zahnrad 10 geringer ist als bei einem herkömmlichen Zahnrad. Diese verringerte Belastung bedingt einen geringeren Verschleiß des Zahnriemens 14 bzw. des Zahnrades 10 und führt zu längeren Standzeiten des Zahnriemenantriebes.

Es ist klar, daß es vom Einzelfall des Einsatzes des Zahnriemen- bzw. Kettenantriebes abhängt, welche Zähne bzw. Kettenglieder mit geänderter Flankengeometrie ausgestattet werden, und wie diese veränderte Geometrie angeordnet wird. Beispielsweise sind unterschiedliche Zähne für eine 4- oder eine 5-zylindrige Brennkraftmaschine entsprechend zu verändern.

Je nach dem, ob sich der oder die veränderten Zähne auf dem Zahnrad 10 und/oder dem Zahnriemen 14 befinden, ist das Zahnrad 10 oder der Zahnriemen 14 bzw. die Kette in einer genau vordefinierten Position zu montieren, so daß im Betrieb der Brennkraftmaschine die geänderte Flankengeometrie in der korrekten zeitlichen Zuordnung, d.h. bei Belastungsspitzen durch Zünden im jeweiligen Zylinder, am Kurbelwellenrad 10 zum Tragen kommt.

Es können einzelne oder alle Zähne des Zahnrades 10 mit einer optimalen Geometrie versehen werden. Bei bekanntem Belastungsverlauf über den Umfang von Zahnriemen 14 bzw. Zahnrad 10 ist es ebenfalls möglich, daß sich die Flankengeometrien über den Verlauf von Zahnriemen 14 bzw. Zahnrad 10 entsprechend ändern. Im Extremfall hat jeder Zahn eine andere Flankengeometrie.

Die Erfindung ist ferner nicht auf Antriebssysteme, wie in Figur 1 dargestellt, begrenzt. Vielmehr kann es allgemein in Transmissionssystemen zu Belastungsspitzen kommen, die mit einer erfindungsgemäßen Anordnung entsprechend ausgeglichen werden können, so z. B. auch in Fahrradantrieben.

## Patentansprüche

1. Zahnriemen- oder Kettengetriebe mit wenigstens einem Zahnrad (10), das mit wenigstens einem Zahnriemen (14) oder wenigstens einer Kette in Eingriff ist, wobei wenigstens ein Zahnradzahn (24,26) und/oder wenigstens ein Zahnriemenzahn bzw. ein Kettenglied eine Flankengeometrie (18/20) aufweist, die von der Flankengeometrie der jeweils übrigen Zähne bzw. Glieder abweicht,
**dadurch gekennzeichnet, daß**
der die abweichende Flankengeometrie (18/20) aufweisende Zahnriemenzahn oder das die abweichende Flankengeometrie (18/20) aufweisende Kettenglied derart angeordnet ist, daß dieser Zahnriemenzahn bzw. dieses Kettenglied im Moment einer Lastspitze mit dem wenigstens einem Zahnrad (10) in Eingriff ist,
oder
der die abweichende Flankengeometrie (18/20) aufweisende Zahnradzahn derart angeordnet ist, daß dieser Zahnradzahn im Moment einer Lastspitze mit dem wenigstens einem Zahnriemen bzw. der Kette in Eingriff ist, und
wobei durch den Einlauf oder den Auslauf des Eingriffs der kämmenden Teile der Moment der Lastspitze definiert ist.

2. Zahnriemen- oder Kettengetriebe nach Anspruch 1,
dadurch gekennzeichnet, daß
die Flankengeometrie bezüglich Vorder- und Hinterflanke (18, 20) des wenigstens einen Zahnes vom Zahnriemen und/oder Zahnrad (10) bzw. des wenigstens einen Gliedes der Kette asymmetrisch ist.

3. Zahnriemen- oder Kettengetriebe nach Anspruch 1 oder 2,
dadurch gekennzeichnet, daß
der wenigstens eine Zahn vom Zahnriemen und/oder Zahnrad (10) bzw. das wenigstens eine Glied der Kette eine steilere und/oder flachere Flankengeometrie aufweist.

4. Zahnriemen- oder Kettengetriebe nach wenigstens einem der vorstehenden Ansprüche,
dadurch gekennzeichnet, daß
der wenigstens eine Zahn vom Zahnriemen (14) und/oder Zahnrad bzw. das wenigstens eine Glied der Kette einen größeren oder einen kleineren Kopfradius hat.

5. Zahnriemen- oder Kettengetriebe nach wenigstens. einem der vorstehenden Ansprüche,
dadurch gekennzeichnet, daß
der wenigstens eine Zahn des Zahnriemens (14) bzw. das wenigstens eine Glied der Kette mit von den übrigen Zähnen bzw. Gliedern abweichender Flankengeometrie derart angeordnet ist, daß sich dieser Zahn oder dieses Glied im Moment einer Lastspitze im Einlauf oder im Auslauf des Eingriffs mit wenigstens einem der Zahnräder (10) befindet.

6. Zahnriemen- oder Kettengetriebe nach wenigstens einem der vorstehenden Ansprüche,
dadurch gekennzeichnet, daß
der wenigstens eine Zahn des Zahnrades (10) mit von den übrigen Zähnen abweichender Flankengeometrie derart angeordnet ist, daß sich dieser Zahn im Moment einer Lastspitze im Einlauf oder im Auslauf des Eingriffs mit dem Zahnriemen (14) bzw. der Kette befindet.

7. Zahnriemen- oder Kettengetriebe nach wenigstens einem der vorstehenden Ansprüche,
dadurch gekennzeichnet, daß
wenigstens zwei Zähne des Zahnriemens (14) bzw. wenigstens zwei Glieder der Kette mit von den übrigen Zähnen bzw. Gliedern abweichender Flankengeometrie derart angeordnet sind, daß sich diese Zähne oder diese Glieder im Moment einer Lastspitze im Einlauf und/oder im Auslauf des Eingriffs mit wenigstens einem der Zahnräder (10) befinden.

8. Zahnriemen- oder Kettengetriebe nach wenigstens einem der vorstehenden Ansprüche,
dadurch gekennzeichnet, daß
wenigstens zwei Zähne des Zahnrades (10) mit von den übrigen Zähnen abweichender Flankengeometrie derart angeordnet sind, daß sich diese Zähne im Moment einer Lastspitze im Einlauf und/oder im Auslauf des Eingriffs mit dem Zahnriemen (14) bzw. der Kette befinden.

9. Zahnriemen- oder Kettengetriebe nach wenigstens einem der vorstehenden Ansprüche,
dadurch gekennzeichnet, daß
alle Zähne bzw. Kettenglieder gemäß einem Belastungsverlauf über dem Umfang des Zahnrades (10) und/oder des Zahnriemens (14) bzw. der Kette entsprechend unterschiedliche Flankengeometrien aufweisen.

10. Zahnriemen- oder Kettengetriebe nach wenigstens einem der vorstehenden Ansprüche,
dadurch gekennzeichnet, daß
die unterschiedliche Flankengeometrie sowohl einem antreibenden wie auch einem angetriebenen Rad bzw. in deren Bereichen dem Zahnriemen oder der Kette zugeordnet ist.

11. Zahnriemen- oder Kettengetriebe nach Anspruch 10,
dadurch gekennzeichnet, daß
die unterschiedlichen Flankengeometrien den Rädern derart zugeordnet sind, daß die infolge des Betriebes auftretende Längenänderung des Zahnriemens oder der Kette und die damit verbundenen Teilungsfehler über jeweils mehrere Zahnflanken auf den Wert 0 oder nahezu 0 abgebaut werden.

12. Verwendung eines Zahnriemengetriebes nach wenigstens einem der vorstehenden Ansprüche 1-11 für eine Kurbelwelle eines Antriebsaggregat, insbesondere eines Kraftfahrzeuges.

13. Verwendung eines Zahnriemengetriebes nach wenigstens einem der vorstehenden Ansprüche 1-11 für einen Synchron-Zahnriemenantrieb in einem Antriebsaggregat eines Antriebsaggregat, insbesondere eines Kraftfahrzeuges.

14. Verwendung eines Zahnriemengetriebes nach wenigstens einem der vorstehenden Ansprüche 1-11 für eine Verteilereinspritzpumpe eines Antriebsaggregat, insbesondere eines Kraftfahrzeuges.

15. Verwendung eines Zahnriemengetriebes nach wenigstens einem der vorstehenden Ansprüche 1-11 für ein Transmissionssystem.

16. Verwendung eines Zahnriemengetriebes nach wenigstens einem der vorstehenden Ansprüche 1-11 für einen Nockenwellenantrieb eines Antriebsaggregates, insbesondere eines Kraftfahrzeuges.

17. Verwendung eines Zahnriemengetriebes nach wenigstens einem der vorstehenden Ansprüche 1-11 für einen Antrieb eines Pumpe-Düse-Direkteinspritzsystems oder einer Hochdruckpumpe für Common-Rail-Hochdruckeinspritzung eines Antriebsaggregates, insbesondere eines Kraftfahrzeuges.

18. Verwendung eines Zahnriemengetriebes nach wenigstens einem der vorstehenden Ansprüche 1-11 für einen Fahrradantrieb.

19. Verwendung eines Zahnriementriebes nach mindestens einem der vorherhergehenden Ansprüche 1-11 für einen Antrieb einer Hochdruckpumpe einer 4-zylindrigen Brennkraftmaschine.

20. Verwendung eines Zahnriementriebes nach Anspruch 19, wobei dem von einer Kurbelwelle (12) angetriebenen wenigstens einen Zahnrad (10) an zwei gegenüberliegenden Stellen je ein Zahn (24, 26) mit abweichender Flankengeometrie zugeordnet ist.

## Claims

1. Toothed belt drive or chain drive with at least one toothed wheel (10) which is in engagement with at least one toothed belt (14) or at least one chain, wherein at least one toothed wheel tooth (24, 26) and/or at least one toothed belt tooth or chain link has a flank geometry (18/20) which is different from the flank geometry of each of the other teeth or links,
characterised in that
the toothed belt tooth having the different flank geometry (18/20) or the chain link having the different flank geometry (18/20) is disposed in such a way that this toothed belt tooth or this chain link is in engagement with the at least one toothed wheel (10) at the moment of a load peak.
or
the toothed wheel tooth having the different flank geometry (18/20) is disposed in such a way that this toothed wheel tooth is in engagement with the at least one toothed belt or with the chain at the moment of a load peak, and
wherein the moment of the load peak is defined by the meshing parts coming into or out of engagement.

2. Toothed belt drive or chain drive according to claim 1,
characterised in that
with respect to the front and rear flanks (18, 20) of the at least one tooth of the toothed belt and/or toothed wheel (10) or of the at least one link of the chain, the flank geometry is asymmetrical.

3. Toothed belt drive or chain drive according to claim 1 or 2,
characterised in that
the at least one tooth of the toothed belt and/or toothed wheel (10) or the at least one link of the chain comprises a steeper and/or shallower flank geometry.

4. Toothed belt drive or chain drive according to at least one of the preceding claims,
characterised in that
the at least one tooth of the toothed belt (14) and/or toothed wheel or the at least one link of the chain has a larger or a smaller head radius.

5. Toothed belt drive or chain drive according to at least one of the preceding claims,
characterised in that
the at least one tooth of the toothed belt (14) or the at least one link of the chain which has a flank geometry with is different from the other teeth or links, is disposed in such a way that, at the moment of a load peak this tooth or this link is coming into or out of engagement with at least one of the toothed wheels (10).

6. Toothed belt drive or chain drive according to at least one of the preceding claims,
characterised in that
the at least one tooth of the toothed wheel (10) which has a flank geometry which is different from the other teeth, is disposed in such a way that, at the moment of a load peak, this tooth is coming into or out of engagement with the toothed belt (14) or the chain.

7. Toothed belt drive or chain drive according to at least one of the preceding claims,
characterised in that
at least two teeth of the toothed belt (14) or at least two links of the chain which have a flank geometry with is different from the other teeth or links, are disposed in such a way that, at the moment of a load peak, these teeth or these links are coming into and/or out of engagement with at least one of the toothed wheels (10).

8. Toothed belt drive or chain drive according to at least one of the preceding claims,
characterised in that
at least two teeth of the toothed wheel (10) which have a flank geometry which is different form the other teeth, are disposed in such a way that, at the moment of a load peak, these teeth are coming into and/or out of engagement with the toothed belt (14) or the chain.

9. Toothed belt drive or chain drive according to at least one of the preceding claims,
characterised in that
in accordance with a load progression over the periphery of the toothed wheel (10) and/or of the toothed belt (14) or of the chain, all teeth or chain links have appropriately different flank geometries.

10. Toothed belt drive or chain drive according to at least one of the preceding claims,
characterised in that
the different flank geometry is allocated both to a driving and to a driven wheel or in the regions thereof to the toothed belt or to the chain.

11. Toothed belt drive or chain drive according to claim 10,
characterised in that
the different flank geometries are allocated to the wheels in such a way that the change in length of the toothed belt or the chain occurring as a result of operation, and the pitch errors associated therewith are reduced to the value of 0 or almost 0 over a plurality of tooth flanks in each case.

12. Use of a toothed belt drive according to at least one of the preceding claims 1-11 for a crankshaft of a driving unit, in particular of a motor vehicle.

13. Use of a toothed belt drive according to at least one of the preceding claims 1-11 for a synchronising toothed belt drive in a driving unit of a driving unit , in particular of a motor vehicle.

14. Use of a toothed belt drive according to at least one of the preceding claims 1-11 for a distributor injection pump of a driving unit, in particular of a motor vehicle.

15. Use of a toothed belt drive according to at least one of the preceding claims 1-11 for a transmission system.

16. Use of a toothed belt drive according to at least one of the preceding claims 1-11 for a cam shaft drive of a driving unit, in particular of a motor vehicle.

17. Use of a toothed belt drive according to at least one of the preceding claims 1-11 for a drive of a pump and nozzle direct injection system or of a high pressure pump for common rail high pressure injection of a driving unit, in particular of a motor vehicle.

18. Use of a toothed belt drive according to at least one of the preceding claims 1-11 for a bicycle drive.

19. Use of a toothed belt drive according to at least one of the preceding claims 1-11 for a drive of a high pressure pump of a four-cylinder internal combustion engine.

20. Use of a toothed belt drive according to claim 19, wherein at two opposite points a respective tooth (24, 26) with a different flank geometry is allocated to the at least one toothed wheel (10) which is driven by a crankshaft (12).

## Revendications

1. Engrenage à courroie dentée ou à chaîne avec une roue dentée (10) au nombre d'au moins une, qui est en prise avec une courroie dentée (14) au nombre d'au moins une, ou avec une chaîne au nombre d'au moins une, dans lequel au moins une dent (24,26) de roue dentée et/ou au moins une dent de courroie dentée et/ou un maillon de chaîne, présente une géométrie de flanc (18,20) qui diffère de la géométrie de flanc des autres dents ou, respectivement, maillons,
caractérisé en ce que
la dent de courroie dentée présentant la géométrie de flanc différente (18/20) ou le maillon de chaîne présentant la géométrie de flanc différente (18/20) est disposé de façon que ladite dent de courroie dentée ou, respectivement, ledit maillon de chaîne soit en prise avec la roue dentée (10), au nombre d'au moins une, au moment d'un pic de charge,
ou la dent de roue dentée présentant la géométrie de flanc différente (18/20) est disposée de façon que ladite dent de roue dentée soit en prise avec la courroie dentée, au nombre d'au moins une, ou, respectivement, avec la chaîne au moment d'un pic de charge, et
le moment du pic de charge est défini par l'entrée en prise ou la sortie de prise des éléments engrenants.

2. Engrenage à courroie dentée ou à chaîne selon la revendication 1, caractérisé en ce que la géométrie de flanc entre les flancs avant et arrière (18, 20) de la dent, au nombre d'au moins une, de la courroie dentée et/ou de la roue dentée (10) ou, respectivement, du maillon, au nombre d'au moins un, de la chaîne est asymétrique.

3. Engrenage à courroie dentée ou à chaîne selon la revendication 1 ou 2, caractérisé en ce que la dent, au nombre d'au moins une, de la courroie dentée et/ou de la roue dentée (10) ou, respectivement, le maillon, au nombre d'au moins un, de la chaîne présente une géométrie de flanc plus pentue et/ou plus plate.

4. Engrenage à courroie dentée ou à chaîne selon au moins l'une des revendications précédentes, caractérisé en ce que la dent, au nombre d'au moins une, de la courroie dentée (14) et/ou de la roue dentée ou, respectivement, le maillon, au nombre d'au moins un, de la chaîne possède un rayon de sommet plus grand ou plus petit.

5. Engrenage à courroie dentée ou à chaîne selon au moins l'une des revendications précédentes, caractérisé en ce que la dent, au nombre d'au moins une, de la courroie dentée (14) ou, respectivement, le maillon, au nombre d'au moins un, de la chaîne avec une géométrie de flanc différente des autres dents ou, respectivement, maillons est disposé de façon que ladite dent ou ledit maillon se trouve au point de mise en prise ou de mise hors prise avec au moins l'une des roues dentées (10) au moment d'un pic de charge.

6. Engrenage à courroie dentée ou à chaîne selon au moins l'une des revendications précédentes, caractérisé en ce que la dent, au nombre d'au moins une, de la roue dentée (10) avec une géométrie de flanc différente des autres dents est disposée de façon que ladite dent se trouve au point de mise en prise ou de mise hors prise avec la courroie dentée (14) ou, respectivement, avec la chaîne au moment d'un pic de charge.

7. Engrenage à courroie dentée ou à chaîne selon au moins l'une des revendications précédentes, caractérisé en ce qu'au moins deux dents de la courroie dentée (14) ou, respectivement, au moins deux maillons de la chaîne avec une géométrie de flanc différente des autres dents ou, respectivement, maillons, sont disposés de façon que lesdites dents ou lesdits maillons se trouvent au point de mise en prise et/ou de mise hors prise avec au moins l'une des roues dentées (10) au moment d'un pic de charge.

8. Engrenage à courroie dentée ou à chaîne selon au moins l'une des revendications précédentes, caractérisé en ce qu'au moins deux dents de la roue dentée (10) avec une géométrie de flanc différente des autres dents sont disposées de façon que lesdites dents se trouvent au point de mise en prise et/ou de mise hors prise avec la courroie dentée (14) ou, respectivement, avec la chaîne, au moment d'un pic de charge.

9. Engrenage à courroie dentée ou à chaîne selon au moins l'une des revendications précédentes, caractérisé en ce que toutes les dents ou, respectivement, tous les maillons de chaîne présentent, sur la périphérie de la roue dentée (10) et/ou de la courroie dentée (14) ou, respectivement, de la chaîne, des géométries de flancs différentes correspondant à une courbe de charge.

10. Engrenage à courroie dentée ou à chaîne selon au moins l'une des revendications précédentes, caractérisé en ce que la géométrie de flanc différente est appliquée aussi bien à une roue d'entraînement qu'à une roue entraînée ou, respectivement, dans leurs zones, à la courroie dentée ou à la chaîne.

11. Engrenage à courroie dentée ou à chaîne selon la revendication 10, caractérisé en ce que les géométries de flancs différentes sont affectées aux roues de façon que la modification de longueur de la courroie dentée ou de la chaîne se produisant du fait du fonctionnement et les erreurs de pas qui y sont associées sont ramenées à une valeur nulle ou presque nulle au moyen, respectivement, de plusieurs flancs de dents.

12. Utilisation d'un engrenage à courroie dentée selon au moins l'une des revendications précédentes 1 à 11 pour un vilebrequin d'un groupe d'entraînement, en particulier d'un véhicule automobile.

13. Utilisation d'un engrenage à courroie dentée selon au moins l'une des revendications précédentes 1 à 11 pour un moyen d'entraînement synchrone à courroie dentée dans un groupe d'entraînement d'un groupe d'entraînement, en particulier d'un véhicule automobile.

14. Utilisation d'un engrenage à courroie dentée selon au moins l'une des revendications précédentes 1 à 11 pour une pompe d'injection à distributeur d'un groupe d'entraînement, en particulier d'un véhicule automobile.

15. Utilisation d'un engrenage à courroie dentée selon au moins l'une des revendications précédentes 1 à 11 pour un système de transmission.

16. Utilisation d'un engrenage à courroie dentée selon au moins l'une des revendications précédentes 1 à 11 pour un moyen d'entraînement d'arbre à cames d'un groupe d'entraînement, en particulier d'un véhicule automobile.

17. Utilisation d'un engrenage à courroie dentée selon au moins l'une des revendications précédentes 1 à 11 pour un moyen d'entraînement d'un système d'injection directe à gicleur de pompe ou d'une pompe à haute pression pour injection à haute pression à rampe commune d'un groupe d'entraînement, en particulier d'un véhicule automobile.

18. Utilisation d'un engrenage à courroie dentée selon au moins l'une des revendications précédentes 1 à 11 pour un entraînement de bicyclette.

19. Utilisation d'un moyen d'actionnement à courroie dentée selon au moins l'une des revendications précédentes 1 à 11 pour un moyen d'entraînement d'une pompe à haute pression d'un moteur à combustion interne à quatre cylindres.

20. Utilisation d'un moyen d'actionnement à courroie dentée selon la revendication 19, une dent (24, 26) à géométrie de flanc différente étant ménagée, en deux endroits diamétralement opposés, sur la roue dentée (10), au nombre d'au moins une, entraînée par un vilebrequin (12).
